Europäisches Patentamt

European Patent Office

Office européen des brevets

(19)

(11) Numéro de publication: **0 275 747 B1**

(12) **FASCICULE DE BREVET EUROPEEN**

(45) Date de publication de fascicule du brevet:
03.04.91

(51) Int. Cl.⁵: **G11B 11/10**, G11B 5/60, G11B 13/04

(21) Numéro de dépôt: **87402843.4**

(22) Date de dépôt: **14.12.87**

(54) Tête d'écriture magnétique et de lecture optique d'un support d'informations.

(30) Priorité: **30.12.86 FR 8618321**

(43) Date de publication de la demande:
**27.07.88 Bulletin 88/30**

(45) Mention de la délivrance du brevet:
**03.04.91 Bulletin 91/14**

(84) Etats contractants désignés:
**DE FR GB IT NL**

(56) Documents cités:
**EP-A- 0 115 458**

**IBM TECHNICAL DISLCOSURE BULLETIN, vol. 27, no. 6, novembre 1984, pages 3479-3480, Armonk, N.Y., US; F. SCHEDEWIE: "Optically sensitive magnetic head"**

**PATENT ABSTRACTS OF JAPAN, vol. 10, no. 195 (P-475)[2251], 9 juillet 1986; & JP-A-61 39 251 (SONY CORP.) 25-02-1986**

(73) Titulaire: **BULL S.A.**
**121 avenue de Malakoff P.B. 193.16**
**F-75764 Paris Cédex 16(FR)**

(72) Inventeur: **Maury, Christian**
**2, allée Dauphine**
**F-78140 Velizy(FR)**
Inventeur: **Pham, Dan**
**1, square Edmond Barbanson**
**F-92220 Bagneux(FR)**
Inventeur: **Richard, Jean-Marie**
**23 bis, rue Vauquelin**
**F-78800 Houilles(FR)**

(74) Mandataire: **Gouesmel, Daniel et al**
**BULL S.A. Industrial Property Department**
**P.C.: HQ 8M006 B.P. 193.16 121 avenue de Malakoff**
**F-75764 Paris Cédex 16(FR)**

## Description

La présente invention concerne une tête d'écriture magnétique et de lecture optique d'un support d'informations. Elle est tout particulièrement applicable à l'écriture et à la lecture d'informations sur les disques magnétiques d'une mémoire à disques magnétooptique.

On sait que les mémoires à disques magnétooptiques sont des mémoires où les informations sont enregistrées sur des disques magnétiques et lues par des dispositifs optoélectroniques. Ces mémoires ont de plus en plus tendance à être utilisées car elles permettent d'obtenir des densités radiales et longitudinales élevées de l'ordre respectivement de quelques milliers de pistes par centimètre et 100 000 informations par centimètre. (La densité radiale est le nombre de pistes par unité de longueur mesurée suivant le diamètre du disque alors que la densité longitudinale est le nombre d'informations par unité de longueur mesurée suivant la circonférence d'une piste).

Le mode de fonctionnement des mémoires à disques magnétooptiques repose sur l'effet magnétooptique qui concerne l'interaction d'une lumière polarisée rectilignement avec l'état magnétique du matériau constituant la couche d'enregistrement des disques magnétiques. De plus amples détails sur l'effet magnétooptique et sur la manière dont peuvent être lues des informations contenues sur des disques magnétiques dans une mémoire magnétooptique, sont donnés dans le brevet français N° FR-A- 2 514 913 déposé par la Compagnie Internationale pour l'Informatique CII HONEYWELL BULL le 16 octobre 1981.

On appelle pour simplifier transducteurs ou senseurs les moyens qui permettent soit d'écrire (on dit également enregistrer) des informations sur les disques, soit de les lire. A une face d'un disque donné, on associe généralement un ou plusieurs transducteurs (ou senseurs), le disque défilant devant celui-ci ou ceux-ci.

Dans le développement des mémoires à disques magnétooptiques, l'une des tendances actuelles consiste à s'orienter vers des mémoires où les informations sont écrites sur les disques magnétiques par des transducteurs magnétiques, la lecture étant effectuée par un dispositif opto-électronique comprenant un dispositif optique de focalisation plus ou moins complexe associé à des transducteurs photo-électroniques et des circuits d'amplification des signaux délivrés par ces transducteurs. Ces dispositifs opto-électroniques permettent donc d'observer à un moment donné, en un endroit donné, une face d'un disque au moyen d'un faisceau de lumière polarisée et de délivrer un signal électrique dont la tension (ou le courant) est fonction des informations situées à cet endroit.

Les transducteurs magnétiques utilisés pour écrire les informations sont par exemple décrits dans la demande de brevet française N° FR-A- 2.575 577 déposée le 28 décembre 1984 par la Compagnie CII HONEYWELL BULL.

La demande de brevet européen EP-A- 0.115.458 déposée le 23 janvier 1984 avec une priorité française du 25 janvier 1983, par la Compagnie CII HONEYWELL BULL, décrit une tête d'écriture magnétique et de lecture optique pour unités à disques magnétooptiques où l'écriture est effectuée par un transducteur magnétique et où la lecture est effectuée par un dispositif optique de focalisation placé à l'intérieur d'un logement pratiqué à l'intérieur de la tête. Cette tête (appelée corps principal dans la demande de brevet en question) est du type Winchester à faible charge et est par exemple constituée par un catamaran comprenant au moins deux patins (également appelés rails ou skis dans la terminologie de l'homme de métier) et une rainure disposée entre ceux-ci. L'optique de focalisation est placée dans un logement pratiqué à l'intérieur de l'un des deux patins. Cette tête d'écriture et de lecture vole au-dessus du support d'informations à une distance encore appelée hauteur de vol de l'ordre de quelques dixièmes de micromètres. L'optique de focalisation est donc située à une distance du support d'informations supérieure ou égale à cette hauteur de vol. Ainsi, du fait même des conditions de vol de la tête au-dessus du disque qui maintiennent la face de celle-ci qui est en regard du disque à une distance constante de celui-ci, on voit que en disposant de manière appropriée l'optique de focalisation à l'intérieur de la tête, la distance entre cette optique et le disque peut être rendue constante pendant tout le temps que dure le vol de la tête au-dessus du disque.

On peut éviter ainsi l'utilisation d'un dispositif d'asservissement de focalisation extrêmement lourd et coûteux.

Dans un mode de réalisation préféré de la tête décrite cidessus, le transducteur magnétique et le dispositif de focalisation (que nous appelons également senseur optique) sont situés sur le même patin.

La tête est montée à l'extrémité d'un bras de suspension lui-même solidaire mécaniquement de la partie mobile d'un actionneur linéaire ou rotatif. Pour réduire l'encombrement des mémoires à disques magnétooptiques, on préfère utiliser des actionneurs de type rotatif parce que ceux-ci ont besoin d'une énergie électrique moindre qu'un actionneur linéaire et que leur encombrement est moins important. Un tel actionneur rotatif, par exemple décrit dans la demande de brevet français FR-A- 2523346 déposée le 15 mars 1982 par la Compagnie Internationale pour l'Informatique CII HONEYWELL BULL comporte un équipage mobile en rotation autour d'un axe parallèle à l'axe de rotation du disque magnétiqué et situé à l'extérieur de celui-ci. Lorsque l'actionneur rotatif se déplace, la tête solidaire du bras-support se déplace au-dessus du disque en décrivant un arc-de-cercle.

Lorsque la tête d'écriture et de lecture se trouve audessus de l'une quelconque des pistes du disque, son axe longitudinal fait un angle $\phi$ avec la tangente à la piste. Cet angle, appelé angle d'azimut, varie suivant la piste au-dessus de laquelle se trouve la tête. Ainsi, si la tête se déplace de la piste externe située à la périphérie du disque la piste interne la plus proche du centre du disque, cet angle $\phi$ peut varier, par exemple, entre - 7 à + 7°. Il est clair que les variations de cet angle sont fonction des dispositions géométriques relatives du disque et de l'ensemble formé par l'actionneur rotatif, le bras de suspension et la tête. Etant donné que, par construction, le transducteur magnétique et le dispositif de focalisation ont un axe de symétrie longitudinal commun et que celui-ci est parallèle à l'axe longitudinal de la tête volante, il en résulte les conséquences suivantes :

Pour les distances habituelles séparant l'axe optique du dispositif optique de focalisation et l'axe de symétrie du pôle d'écriture du transducteur magnétique (perpendiculaire à la piste), à savoir quelques dixièmes de millimètres à un millimètre, il existe un écart de position par rapport aux pistes du disque, entre le transducteur magnétique d'écriture et le dispositif optique de focalisation. Ainsi, si le pôle d'écriture du transducteur magnétique se trouve situé en regard d'une piste de numéro d'ordre i, l'optique de focalisation se trouve située en regard de la piste de numéro d'ordre j, avec i différent de j. Pour une distance entre l'axe optique du dispositif optique de focalisation et le pôle d'écriture du transducteur de l'ordre du millimètre, cet écart de position (i - j) est de l'ordre de quelques dizaines de pistes.

Ceci présente l'inconvénient suivant :

Il n'est pas possible de relire les informations écrites par le transducteur magnétique au moyen du dispositif optique de lecture incluant l'optique de focalisation, aussitôt après que ces informations ont été écrites alors que cette opération est couramment effectuée dans les mémoires à disques classiques qui comportent, généralement, ainsi qu'il est bien connu, un seul et même transducteur magnétique d'écriture-lecture. Il est donc alors nécessaire d'écrire au moyen du transducteur toutes les informations d'une piste, puis ces opérations d'écriture étant terminées, de déplacer la tête d'écriture et de lecture de telle sorte que le dispositif optique de focalisation se trouve disposé en regard de la piste qui vient d'être écrite. Dans ce cas, il est nécessaire d'utiliser deux systèmes asservis de positionnement, l'un pour les opérations d'écriture et l'autre, pour les opérations de lecture. Chacun de ces dispositifs a son propre dispositif de mesure de position (en effet, si l'on n'utilisait pour mesurer la position de la tête au-dessus du disque, que le seul dispositif optique incluant l'optique de focalisation, on pourrait certes connaître la position de cette optique de focalisation par rapport au disque, mais on ne connaîtrait pas la position du transducteur magnétique d'écriture étant donné que l'écart de position entre le transducteur magnétique et l'optique de focalisation par rapport aux pistes varie suivant la position occupée par la tête au-dessus du disque). L'utilisation de deux systèmes d'asservissement de position est coûteux et compliqué. Par ailleurs, il est evident que les opérations d'écriture des informations et les opérations de relecture de celles-ci sont relativement longues, en tout cas beaucoup plus longues que les opérations d'écriture et de relecture des informations dans les mémoires à disques classiques.

La présente invention permet de remédier à ces inconvénients en réalisant une tête d'écriture magnétique et de lecture optique d'un support d'informations extrêmement compact, de faibles dimensions, très légère où la disposition relative du transducteur magnétique et de l'optique de lecture est telle que l'on réduit sensiblement tout écart de position entre le transducteur magnétique et l'optique de lecture par rapport aux pistes.

Selon l'invention, le système comprenant un support d'informations magnétiques et une tête d'écriture magnétique et de lecture optique dudit support d'informations magnétique et volant au-dessus dudit support, la tête étant du type à faible charge comporte au moins deux patins et une rainure disposée entre ceux-ci, et comprend au moins :

- un dispositif optique de focalisation d'un faisceau lumineux sur le support,
- un transducteur magnétique d'écriture comprenant un pôle d'écriture et étant disposé sur le même patin que le dispositif optique de focalisation, le dispositif optique et le transducteur magnétique ayant même axe longitudinal,

le système etant est caractérisé en ce que, dans le but de lire les informations d'une piste du support immédiatement après les avoir écrites, en réduisant les effets de l'angle d'azimut entre ledit axe longitudinal et la tangente à la piste écrite de telle sorte que le transducteur magnétique et le faisceau lumineux soient disposés en regard de la même piste, ce dispositif optique et le transducteur sont disposés au voisinage immédiat l'un de l'autre, de sorte que la distance d entre l'axe optique du dispositif optique de focalisation et le plan de symétrie du pôle d'écriture du transducteur, qui est perpendiculaire à l'axe longitudinal, est strictement inférieure au rapport entre, d'une part, la différence entre la largeur $L_p$ des pistes écrites par le transducteur et le diamètre D du spot lumineux produit par l'optique de focalisation et, d'autre part, le double du sinus de l'angle d'azimut maximum.

Dans une forme de réalisation préférée de l'invention, cette distance d est comprise entre deux et quatre micromètres.

La tête d'écriture magnétique et de lecture optique est réalisée au moyen de techniques VLSI, aussi bien en ce qui concerne les patins et la rainure que le transducteur magnétique d'écriture et l'optique de focalisation. Cette dernière peut par exemple être une optique intégrée se terminant par un guide d'ondes.

D'autres caractéristiques et avantages de la présente invention apparaîtront dans la description suivante donnée à titre d'exemple non limitatif et en se référant aux figures annexées.

Sur ces dessins :

- La figure 1 composée des figures 1a et 1b montre une tête d'écriture magnétique et de lecture optique d'un support d'informations, selon l'Art Antérieur telle que décrite dans la demande de brevet européen précitée.
- La figure 2 est une vue de dessus montrant la position relative d'un actionneur rotatif et d'un disque magnétique, la tête montrée à la figure 1 étant montée à l'extrémité d'un bras de suspension solidaire de cet actionneur rotatif.
- La figure 3 composée des figures 3a et 3b, illustre les conséquences qui résultent de la disposition relative de la tête montrée à la figure 1 et des pistes du disque pour l'écart de position entre le pôle d'écriture du transducteur magnétique et le dispositif optique de focalisation par rapport aux pistes du disque, lorsque la tête est solidaire d'un actionneur rotatif.
- La figure 4 est un schéma simplifié montrant une tête d'écriture magnétique et de lecture optique selon l'invention, montrant plus particulièrement le pôle d'écriture du transducteur magnétique et l'optique de focalisation, vus en coupe dans un plan parallèle au support d'informations.
- La figure 5 montre l'écart maximum toléré et l'écart normal utilisé dans l'invention existant entre la position du dispositif optique de focalisation et l'axe de symétrie longitudinal d'une piste quelconque du disque, pour une valeur maximum de l'angle d'azimut.
- La figure 6 composée des figures 6a et 6b est une vue de dessous, depuis le disque magnétique, montrant une tête d'écriture magnétique et de lecture optique selon l'invention montrant comment sont disposés le transducteur magnétique et le dispositif optique de focalisation par rapport à la tête dans son ensemble.

- La figure 7 est une vue en coupe longitudinale prise dans un plan perpendiculaire au disque magnétique parallèle au sens de défilement des informations, montrant la disposition relative du dispositif optique de focalisation et du pôle d'écriture du transducteur magnétique.

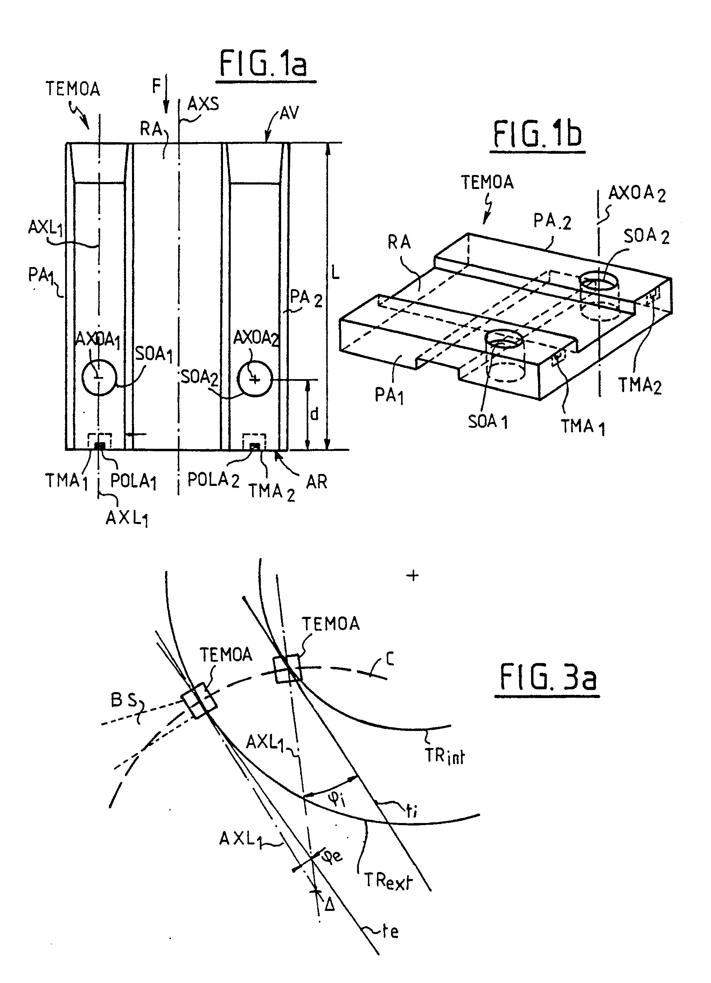

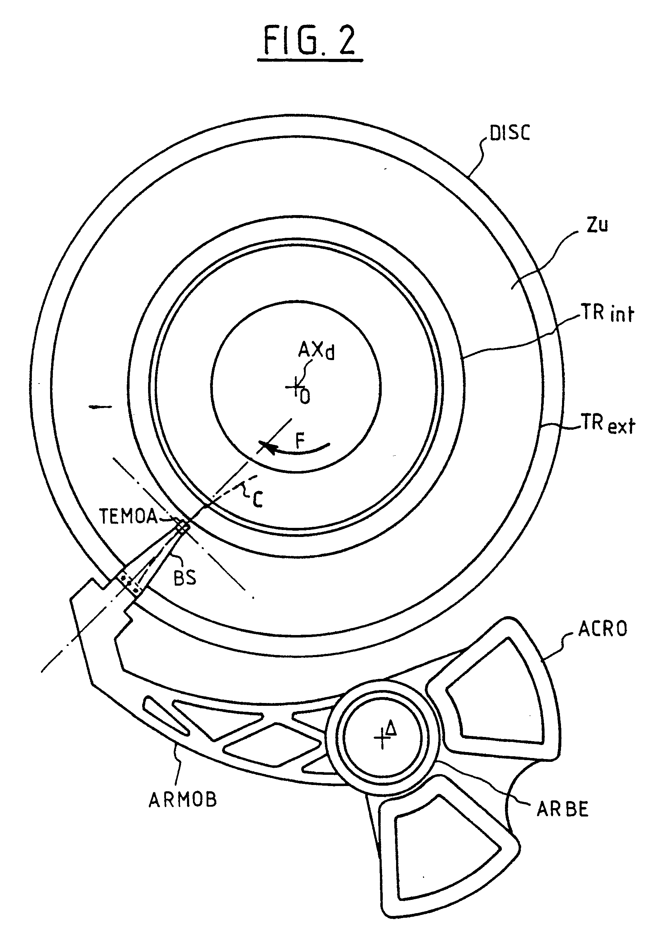

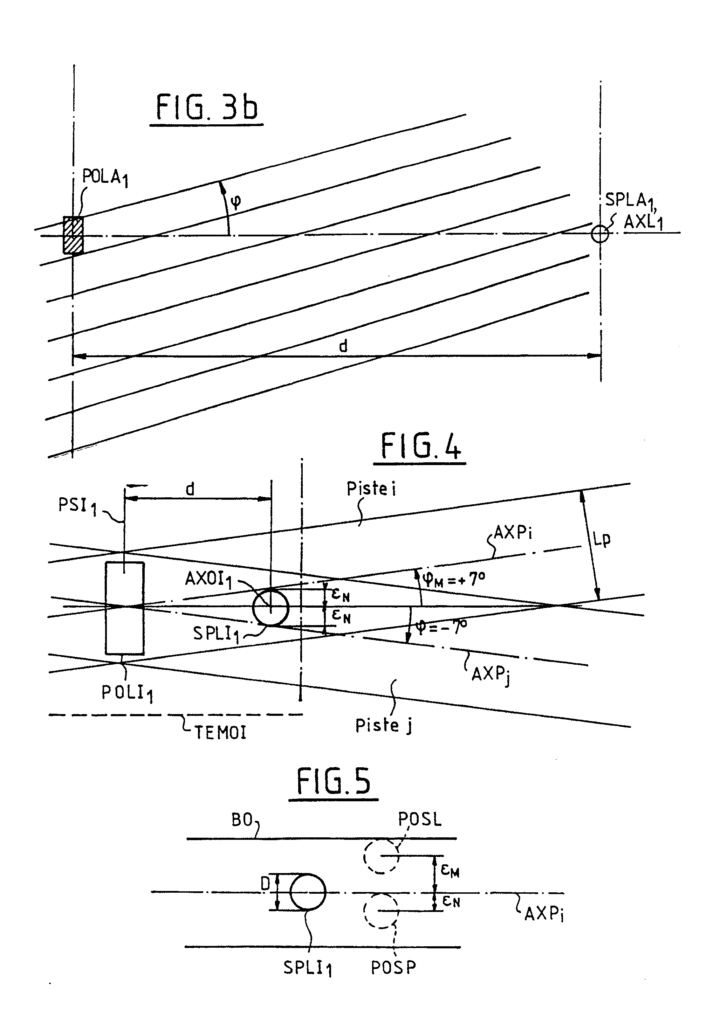

Pour mieux comprendre comment est constituée la tête d'écriture magnétique et de lecture optique d'un support d'informations selon l'invention, il est utile d'effectuer quelques rappels illustrés par les figures 1, 2, 3 montrant une telle tête selon l'Art Antérieur (figure 1), comment elle est disposée par rapport au disque lorsqu'elle est solidaire d'un actionneur rotatif (figure 2) et des conséquences qui en résultent sur la position relative de la tête dans son ensemble par rapport aux pistes du disque (figure 3a) et de la position relative du pôle d'écriture du transducteur magnétique et du dispositif optique de focalisation par rapport aux pistes du disque (figure 3b).

On considère la figure 1.

Cette dernière montre une tête TEMOA volante d'écriture magnétique et de lecture optique d'un support d'informations qui défile dans le sens de la flèche F. La tête est supposée être de type catamaran, c'est à dire, comprenant deux patins $PA_1$ et $PA_2$ séparés par une rainure RA. On appelle avant AV de la tête volante la partie de celle-ci qui voit la première dans le temps défiler les informations devant elle, alors qu'on appelle arrière AR de la tête la partie de celle-ci qui voit la dernière dans le temps défiler les informations devant elle. On appelle AXS l'axe de symétrie longitudinal de la plate-forme (c'est-à-dire l'axe parallèle au sens de défilement F des informations).

La tête TEMOA comprend par exemple deux dispositifs optiques de focalisation $SOA_1$ et $SOA_2$ disposés dans des logements pratiqués à l'intérieur respectivement des patins $PA_1$ et $PA_2$. (Il est bien évident que la tête volante TEMOA peut ne contenir qu'un seul dispositif optique de focalisation, par exemple, $SOA_1$ disposé à l'intérieur du patin $PA_1$).

Chacun des dispositifs optiques de focalisation a une masse de l'ordre du gramme sensiblement équivalente à celle du reste de la tête.

La tête TEMOA comprend, en outre, deux transducteurs magnétiques d'écriture $TMA_1$ -$TMA_2$ disposés à l'arrière AR de la tête, respectivement sur chacun des patins $PA_1$ et $PA_2$.

Par construction, l'axe de symétrie longitudinal du dispositif de focalisation $SOA_1$ ($SOA_2$) est confondu avec l'axe de symétrie longitudinal du transducteur magnétique d'écriture $TMA_1$ ($TMA_2$). Soit $AXL_1$ cet axe de symétrie longitudinal commun aux éléments SOA₁ et TMA₁ Il est parallèle à l'axe de symétrie AXS.

La distance d entre l'axe optique AXOA₁ du dispositif optique SOA₁ et le pôle d'écriture POLA₁ du transducteur magnétique TMA₁ est de quelques dixièmes de millimètres, voire 1 mm.

On considère la figure 2.

Pour les raisons exposées plus haut, on préfère monter la tête volante TEMOA à l'extrémité d'un bras de suspension BS lui-même solidaire de la partie mobile ARMOB d'un actionneur rotatif ACRO. L'actionneur rotatif ACRO est du type de celui décrit dans la demande de brevet français N° FR-A-2.523.346 précitée. Il comprend un arbre d'entraînement en rotation ARBE ayant un axe de rotation situé nettement à l'extérieur du disque DISC. Le disque DISC tourne dans le sens de la flèche F autour de son axe de rotation AX_d Il comprend une zone utile Z_u d'enregistrement disposée entre une piste extérieure TR_ext disposée à la périphérie du disque et une piste interne TR_int disposée au voisinage du centre O du disque. Cette zone utile Z_u comprend plusieurs milliers de pistes. La largeur L_p d'une piste est de l'ordre de trois micromètres, c'est à dire, d'un ordre de grandeur dix fois inférieur environ à la largeur des pistes écrites dans les mémoires à disques magnétiques classiques. Les pistes écrites sont jointives. (Elles ne le sont pas dans les disques magnétiques classiques).

Lorsqu'on déplace la tête volante TEMOA au moyen de l'actionneur rotatif ACRO, elle décrit un arc de cercle C au-dessus de la zone utile Z_u du disque DISC.

On considère la figure 3a.

Sur cette figure, la tête volante TEMOA est représentée, d'une part, en regard de la piste externe TR_ext et d'autre part, en regard de la piste interne TR_int.

Si l'on suppose que les informations ont été écrites par le transducteur TMA₁, c'est en fait le patin PA₁ qui se trouve situé en regard de la piste qui vient d'être écrite.

Ainsi, si le patin PA₁ est situé en regard de la piste externe TR_ext, l'axe AXL₁ défini plus haut fait un angle $\phi_e$ avec la tangente $t_e$ à la piste (dont les dimensions sont supposées négligeables vis-à-vis du patin PA₁).

De même, lorsque le patin PA₁ est disposé en regard de la piste interne TR_int, l'axe AXL₁ fait un angle $\phi$ avec la tangente $t_i$ à la piste interne.

On voit que lorsque la tête volante se déplace de la piste externe vers la piste interne en décrivant l'arc-de-cercle C, l'axe AXL₁ de symétrie du système du dispositif optique de focalisation FOA₁ et du transducteur magnétique TMA₁, fait un angle d'azimut $\phi$ avec la tangente la à piste variant entre les valeurs $\phi_e$ et $\phi_i$.

Suivant les positions relatives des axes de rotation $\Delta$ et AX_d de l'actionneur rotatif et du disque et suivant les dimensions géométriques de l'actionneur rotatif et du disque, l'angle d'azimut $\phi$ peut varier par exemple entre - 7 et + 7°.

On considère la figure 3b où on donne volontairement une valeur relativement grande à $\phi$ pour rendre plus claire la figure.

On a montré sur cette figure les positions relatives par rapport aux différentes pistes du disque, du pôle d'écriture POLA₁ du transducteur magnétique TMA₁ (on suppose par exemple que ce transducteur est du type décrit dans la demande de brevet français FR-A-2.575.577 et le spot lumineux SPLA₁ produit par le dispositif optique de focalisation SOA₁ sur la surface du disque DISC. Si l'on suppose que la distance d entre l'axe optique AXOA₁ du dispositif optique de focalisation SOA₁ et le pôle d'écriture POLA₁ du transducteur TMA₁ est de l'ordre du millimètre, ce dernier écrit des informations sur la piste de numéro d'ordre i, le spot lumineux SPLA₁ se trouvant situé en regard de la piste j avec (i - j) de l'ordre de quelques dizaines, ce chiffre variant continûment lorsque la tête TEMOA se déplace suivant l'arc de cercle C.

Si l'on veut écrire des informations au moyen du transducteur magnétique TMA₁, le spot lumineux SPLA₁ se trouvant au dessus d'une piste quelconque de numéro d'ordre j, il est pratiquement impossible de savoir au-dessus de quelle piste se trouve le pôle d'écriture POLA₁, en déterminant la position de la tête volante TEMOA au moyen du dispositif optique de lecture SOA₁ et du spot lumineux SPLA. On est donc conduit dans ce cas, comme indiqué plus haut, à disposer de deux systèmes d'asservissement de position différents associés l'un au transducteur magnétique d'écriture et l'autre au dispositif optique de lecture SOA₁. Par ailleurs, ainsi qu'il a été écrit plus haut, il est impossible de relire la piste qui vient d'être écrite par le transducteur TMA₁ au moyen du dispositif de lecture SOA₁ immédiatement après que ces informations aient été écrites par le transducteur d'écriture.

La tête volante d'écriture magnétique et de lecture optique d'un support d'informations selon l'invention montrée aux figures 4, 6 et 7 permet de remédier aux inconvénients mentionnés ci-dessus.

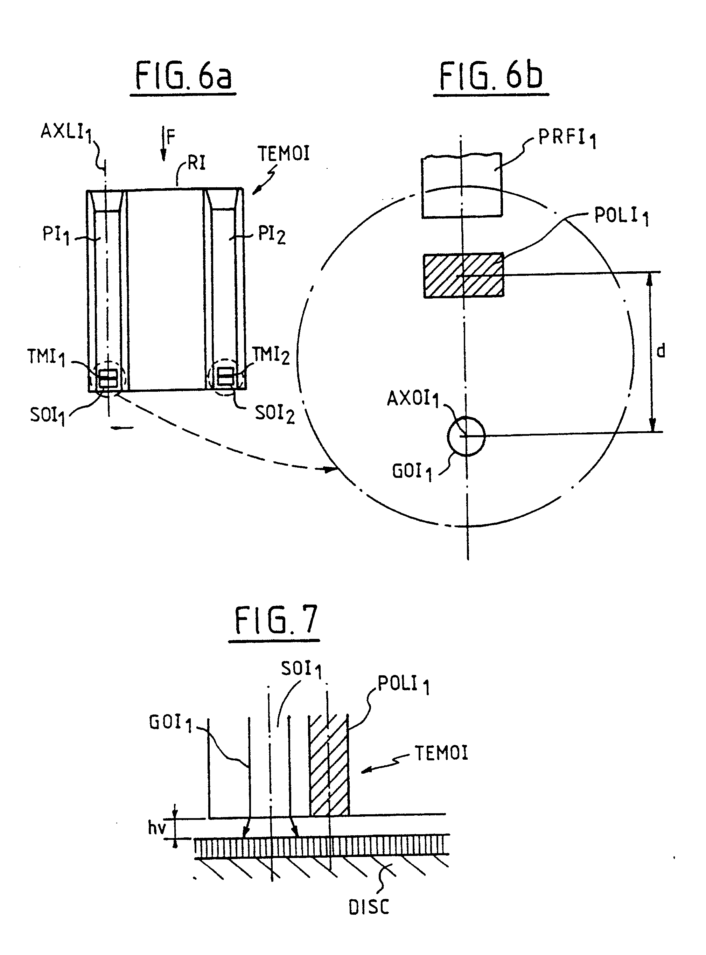

La tête volante d'écriture magnétique et de lecture optique d'un support d'informations selon l'invention, à savoir TEMOI, est telle que, le pôle d'écriture POLI₁ (POLI₂) du transducteur magnétique d'écriture TMI₁ (TMI₂) et le dispositif optique SOI₁ (SOI₂) sont disposés à l'arrière de la tête volante, le pôle d'écriture POLI₁ (POLI₂) et le dispositif optique SOI₁ (SOI₂) étant disposés sur le même patin PI₁, leur axe longitudinal commun étant désigné par AXLI₁. Pour mémoire, on a représenté, à la figure 6b, le pôle de retour de flux $PRFI_1$ du transducteur TMI. Le dispositif optique de focalisation $SOI_1$ ($SOI_2$) est réalisé sous forme d'une optique intégrée comprenant de préférence un guide d'ondes terminal $GOI_1$ ($GOI_2$) produisant le spot lumineux ($SPLI_1$) de sortie du dispositif. La distance d entre l'axe optique $AXOI_1$ du guide d'ondes $GOI_1$ ($GOI_2$) et l'axe de symétrie $PSI_1$ - ($PSI_2$) du pôle d'écriture $POLI_1$ ($POLI_2$) du transducteur magnétique $TMI_1$ ($TMI_2$) qui est perpendiculaire à l'axe longitudinal AXLI 1 est telle que le pôle $POLI_1$ et le spot lumineux $SPLI_1$ sont disposés en regard de la même piste du disque DISC quelle que soit la valeur de l'angle d'azimut $\phi$ . (Le guide d'onde et le spot lumineux ont même axe de symétrie perpendiculaire au support d'informations). En d'autres termes, lorsque la tête TEMOI se déplace sur l'arc de cercle C, le pôle $POLI_1$ et le spot lumineux $SPLI_1$ sont toujours disposés en regard d'une même piste, quelle que soit la position de la tête TEMOI au-dessus du disque. Ainsi, quelle que soit celle-ci, on peut relire au moyen du dispositif optique $SOI_1$, les informations écrites par le pôle d'écriture $POLI_1$ aussitôt après que celles-ci aient été écrites. On améliore ainsi considérablement le temps d'accès aux informations écrites sur le disque DISC, tout en se réservant la possibilité de réécrire des informations considérées comme erronées aussitôt après avoir décelé qu'elles le sont au moyen du dispositif optique de lecture $SOI_1$ Ceci est très important pour l'écriture d'informations dans une mémoire magnétooptique où le taux d'erreurs brut est non négligeable et est estimé de l'ordre de $10^{-5}$ (une information erronée pour $10^5$ informations écrites).

La manière dont est déterminée la distance d entre le plan de symétrie $PSI_1$ et l'axe $AXOI_1$ est illustrée plus particulièrement par les figures 4 et 5.

On considère la piste de numéro d'ordre i dont l'axe de symétrie, plus généralement appelé ligne moyenne, est $AXP_i$. La largeur de piste est $L_p$. On suppose que l'angle d'azimut $\phi$ a une valeur maximale $\phi_M$. La distance d doit être telle que le pôle d'écriture $POLI_1$ et le spot $SPLI_1$ sont disposés en regard de cette même piste de numéro d'ordre i. On désigne par $\epsilon$ la distance entre l'axe $AXOI_1$ du spot lumineux $SPLI_1$ et l'axe $AXP_i$ de la piste de numéro d'ordre i.

Pour que l'on puisse effectuer une lecture valable des informations contenues sur la piste de numéro d'ordre i, pour un angle d'azimut maximal $\phi_m$ M il faut que l'on ait la relation :

$\epsilon_M$ + D/2 = $L_p$/2(1)

où $\epsilon_M$ est l'écart maximum toléré pour lequel le spot lumineux $SPLI_1$ occupe la position limite POSL où il est tangent au bord BO de la piste de numéro d'ordre i. En effet, les pistes de numéro d'ordre i, (i + 1) d'une part et i, (i - 1) d'autre part, étant jointives, il n'est pas possible d'admettre que le spot lumineux $SPLI_1$ recouvre partiellement les pistes voisines de numéro d'ordre (i -1) ou (i + 1).

De la relation (1), on tire :

$\epsilon_M$ = ($L_p$ D)/2(2)

On sait, par ailleurs, que le diamètre D optimal du faisceau lumineux (dont le profil d'intensité lumineuse est Gaussien) $SPLI_1$ est donné par la formule :

D = 0,6$\lambda$/NA(3)

où $\lambda$ est la longueur d'onde du faisceau lumineux et NA l'ouverture numérique du dispositif optique de focalisation.

On peut trouver une justification de cette formule dans le document Intermag 86 Tutorial Lectures, Phoenix, 13 avril 1986, par M.K. HAYNES.

Ainsi si $\lambda$ = 0,82 $\mu$ m et NA = 0.5 on obtient D sensiblement égal à 1 micromètre.

On voit donc que si $L_p$ est égal à 3 $\mu$m on a $\epsilon_M$ = 1 $\mu$m.

Dans la pratique, on préfère utiliser une valeur de $\epsilon$ sensiblement inférieure à $\epsilon_M$. Soit $\epsilon_N$ cette valeur telle que $\epsilon_N$ + D/2 = $L_p$/3 (4) (voir figure 5). On voit que, pour celle-ci, le spot lumineux $SPL_1$ occupe une position préférée POSP située sensibleme à l'intérieur de la piste de numéro d'ordre i. Ainsi, on s'affranchit d'éventuelles variations de la position du spot lumineux $SPLI_1$ dues à une imprécision de positionnement du système asservi de positionnement de la tête TEMOI, ces variations pouvant être de l'ordre de quelques dixièmes de micromètres.

Il suffit alors de remplacer dans la relation (1), $L_p$/2 par $L_p$/3 pour obtenir la formule :

$\epsilon_N$ = (2$L_p$ - 3D)/6(5)

Avec $L_p$ = 3 $\mu$m et D = 1 $\mu$m, on obtient :
$\epsilon_N$ = 0,5 $\mu$m

En considérant la figure 4, on voit que l'on a :
$\epsilon_N$ = d $\times$ sin $\phi_M$ (6), soit encore :
d = $\epsilon_N$/sin$\phi_M$. (7).

En conclusion, on aura donc d inférieur à la valeur $\epsilon_M$/sin $\phi$ M et en pratique, on choisira d = $\epsilon_N$/sin $\phi_M$. On aura donc d < ($L_p$ - D)/2 sin $\phi_M$ (7).

On choisira de préférence d = (2 $L_p$ 3D)/6 sin $\phi_M$(8).

Ainsi, si $\epsilon_N$ 0,5 $\mu$ m et $\phi_M$ = 7°,
on trouve d = 4,1 $\mu$ m

Si $\phi_M$ est égal à 14° on trouve d = 2 $\mu$ m.

Dans la pratique, on choisira donc d compris entre 2 et 4 micromètres.

Pour réaliser la tête TEMOI selon l'invention, on réalisera d'abord le catamaran en silicium et le transducteur magnétique $TMI_1$ par des techniques de masquage et photo-lithogravure, de la même façon que pour les circuits à très haute intégration VLSI, par exemple de la manière décrite dans les brevets français FR-A-2 559 297 déposé le 3 février 1984, et FR-A-2 559 295 déposé le même jour. Le transducteur magnétique peut avoir la structure définie dans l'un des brevets précités. Une fois le transducteur magnétique réalisé, on dépose ensuite le dispositif optique de focalisation SOI₁. Ce dispositif peut être une optique intégrée sur silicium. Une telle optique est décrite par exemple dans le document 21/85 du Laboratoire d'Electronique et de Technologie de l'Informatique du Commissariat de l'Energie Atomique à Grenoble. Le guide d'onde optique GOI₁ est déposé après que le pôle d'écriture POLI₁ ait été déposé par les techniques mentionnées ci-dessus.

On voit donc que le transducteur magnétique TMI₁ et le dispositif optique de focalisation SOI₁ ainsi que son guide d'ondes de sortie GOI₁ sont déposés en couches successives. Iₗ est bien évident qu'on peut réaliser de la même façon un ensemble constitué par un transducteur magnétique TMI₂ et un dispositif optique de focalisation SOI₂ sur le second patin PI₂ du catamaran servant de support à la tête volante TEMOI selon l'invention. De la sorte, le guide d'onde de sortie du faisceau optique, contenu dans les couches de lecture a son axe à une distance d très faible de l'axe de symétrie PSI₁ du pôle d'écriture magnétique POLI₁. Les dépôts successifs sont effectués de sorte que les couches constituant le pôle magnétique d'écriture POLI₁ du transducteur d'écriture sont le plus proche possible des couches constituant le guide d'onde de sortie du dispositif optique de focalisation SOI₁.

## Revendications

1. Système comprenant un support d'informations magnétique (DISC) et une tête d'écriture magnétique et de lecture optique (TEMOI) dudit support d'informations magnétique (DISC) et volant au-dessus dudit support, la tête étant du type à faible charge comporte au moins deux patins (PI1, PI2) et une rainure disposée entre ceux-ci, et comprend moins :

    - un dispositif optique de focalisation (SOI₁, SOI₂) d'un faisceau lumineux (SPLI₁) surr le support (DISC),

    - un transducteur magnétique d'écriture (TMI₁, TMI₂) comprenant un pôle d'écriture (POLI1) et étant disposé sur le même patin (PI₁, PI₂) que le dispositif optique (SOI₁, SOI₂), ce dispositif optique et le transducteur magnétique (TMI₁) ayant même axe longitudinal (AXLI1), le système étant caractérisée en ce que, dans le but de lire les informations d'une piste du support (DISC) immédiatement après les avoir écrites, en réduisant les effets de l'angle d'azimut φ entre le dit axe longitudinal (AXLI1) et la tangente à la piste écrite de telle sorte que le transducteur magnétique et le faisceau lumineux soient disposés en regard de la même piste, ce dispositif optique (SOI1, SOI2) et le transducteur magnétique (TMI1, TMI2) sont disposés au voisinage immédiat l'un de l'autre de telle sorte que la distance d entre l'axe optique du dispositif et le plan de symétrie du pôle d'écriture (POLI₁), qui est perpendiculaire à l'axe longitudinal (AXLI1), est inférieure au rapport entre, d'une part, la différence entre la largeur de piste $L_p$ et le diamètre D du faisceau lumineux produit par le dispositif (SOI₁, SOI₂) et, d'autre part, le double du sinus de l'angle d'azimut maximum $\phi_M$.

2. Système selon la revendication 1 caractérisé en ce que le dispositif optique (SOI₁, SOI₂) est muni d'un guide d'ondes (GOI₁, GOI₂), et la distance d entre l'axe optique du faisceau lumineux produit par le guide d'ondes de sortie et le plan de symétrie du pôle d'écriture (POLI1) est inférieure ou égale au rapport entre, d'une part, la différence entre deux fois la largeur Lp de piste et trois fois le diamètre D du faisceau lumineux et, d'autre part, six fois le sinus de l'angle maximum $\phi_M$.

3. Système selon la revendication 2 caractérisé en ce que la distance d entre l'axe optique et le plan de symétrie du pôle d'écriture (POLI1) est comprise entre 2 et 4 micromètres.

4. Système selon l'une quelconque des revendications 1, 2, 3, caractérisé en ce que le transducteur magnétique d'écriture (TMI₁, TMI₂) est un transducteur magnétique intégré réalisé selon les techniques de très haute intégration de type VLSI, le dispositif optique de focalisation (SOI₁, SOI₂) étant une optique intégrée sur silicium réalisée suivant les techniques de haute intégration VLSI.

5. Système selon la revendication 4 caractérisé en ce que le transducteur magnétique intégré et l'optique intégrée sont disposés à l'arrière d'au-moins l'un des deux patins, le transducteur magnétique étant disposé en amont de l'optique intégrée.

6. Système selon l'une des revendications 1, 2, 3, caractérisée en ce que la tête étant un catamaran en silicium, ce catamaran, le transducteur magnétique, et le dispositif optique sont des éléments intégrés réalisés selon les techniques de haute intégration VLSI.

## Claims

1. System comprising a magnetic data carrier (DISC) and a head for magnetic writing and optical reading (TEMOI) of said magnetic data carrier (DISC) and moving over said carrier, the head being of the lightweight type comprises two or more runners ($PI_1$, $PI_2$) and a groove disposed therebetween, and includes at least:
   - an optical device ($SOI_1$, $SOI_2$) for focussing a light beam ($SPLI_1$) on the carrier (DISC),
   - a magnetic writing transducer ($TMI_1$, $TMI_2$) comprising a writing terminal ($POLI_1$) and being disposed on the same runner ($PI_1$, $PI_2$) as the optical device ($SOI_1$, $SOI_2$), this optical device and the magnetic transducer ($TMI_1$) having the same longitudinal axis ($AXLI_1$), the system being characterised in that, for the purpose of reading the data from a track of the carrier (DISC) immediately after writing them, reducing the effects of the azimuth angle $\phi$ between said longitudinal axis ($AXLI_1$) and the tangent to the written track in such a way that the magnetic transducer and the light beam are disposed opposite the same track, this optical device ($SOI_1$, $SOI_2$) and the magnetic transducer ($TMI_1$, $TMI_2$) are disposed in the immediate vicinity of each other such that the distance d between the optical axis of the device and the plane of symmetry of the writing terminal ($POLI_1$), which is perpendicular to the longitudinal axis ($AXLI_1$), is less than the ratio between, on the one hand, the difference between the track width $L_p$ and the diameter D of the light beam generated by the device ($SOI_1$, $SOI_2$) and, on the other hand, twice the sine of the maximum azimuth angle $\phi_M$.

2. System according to claim 1 characterised in that the optical device ($SOI_1$, $SOI_2$) is provided with a waveguide ($GOI_1$, $GOI_2$), and the distance d between the optical axis of the light beam generated by the output waveguide and the plane of symmetry of the writing terminal ($POLI_1$) is less than or equal to the ratio between, on the one hand, the difference between twice the track width $L_p$ and three times the diameter D of the light beam and, on the other hand, six times the sine of the maximum angle $\phi_M$.

3. System according to claim 2 characterised in that the distance d between the optical axis and the plane of symmetry of the writing terminal ($POLI_1$) is between 2 and 4 micrometres.

4. System according to any of claims 1, 2, 3, characterised in that the magnetic writing transducer ($TMI_1$, $TMI_2$) is an integrated magnetic transducer manufactured by techniques of the very large scale integration (VLSI) type, the optical focussing device ($SOI_1$, $SOI_2$) being an integrated optical system on silicon manufactured by VLSI techniques.

5. System according to claim 4 characterised in that the integrated magnetic transducer and integrated optical system are disposed behind at least one of the two runners, the magnetic transducer being disposed above the integrated optical system.

6. System according to any of claims 1, 2, 3, characterised in that the head being a catamaran made of silicon, this catamaran, the magnetic transducer and the optical device are integrated components manufactured by VLSI techniques.

## Ansprüche

1. System mit einem magnetischen Datenträger (DISC) und einem oberhalb des magnetischen Datenträgers (DISC) schwebenden Kopf zum magnetischen Schreiben und optischen Lesen (TEMOI) des Trägers, wobei der Kopf, der von einer Konzeption mit geringer Andruckkraft ist, wenigstens zwei Kufen ($PI_1$, $PI_2$) und eine zwischen diesen angeordnete Vertiefung enthält, und mit wenigstens
   - einer optischen Vorrichtung ($SOI_1$, $SOI_2$) zum Fokussieren eines Lichtstrahls ($SPLI_1$) auf dem Träger (DISC),
   - einem Schreib-Wandler ($TMI_1$, $TMI_2$), der einen Schreibpol ($POLI_1$) umfaßt und auf der gleichen Kufe ($PI_1$, $PI_2$) wie die optische Vorrichtung ($SOI_1$, $SOI_2$) angeordnet ist, wobei die optische Vorrichtung und der Wandler ($TMI_2$) die gleiche Längsachse ($AXLI_1$) besitzen, wobei das System dadurch gekennzeichnet ist, daß beim Lesen der Daten einer Spur des Trägers (DISC) unmittelbar nach deren Schreiben zur Verringerung der Auswirkungen des Azimutwinkels $\phi$ zwischen

der Längsachse (AXLI₁) und der Tangente an diejenige Spur, in bezug auf die sowohl der Wandler als auch der Lichtstrahl ausgerichtet sind, diese optische Vorrichtung (SOI₁, SOI₂) und der Wandler (TMI₁, TMI₂) in unmittelbarer gegenseitiger Nähe angeordnet sind, derart, daß der Abstand d zwischen der optischen Achse der Vorrichtung und der Symmetrieebene des Schreibpols (POL₁), die senkrecht zur Längsachse (AXLI₁) orientiert ist, kleiner ist als das Verhältnis der Differenz zwischen der Breite der Spur $L_p$ und dem Durchmesser D des von der Vorrichtung (SOI₁, SOI₂) erzeugten Lichtstrahls einerseits und dem doppelten Sinus des maximalen Azimutwinkels $\phi_M$ andererseits.

2. System gemäß Anspruch 1, dadurch gekennzeichnet, daß die optische Vorrichtung (SOI₁, SOI₂) mit einem Wellenleiter (GOI₁, GOI₂) versehen ist und der Abstand d zwischen der optischen Achse des vom Ausgangswellenleiter erzeugten Lichtstrahls und der Symmetrieebene des Schreibpols (POLI₁) gleich oder kleiner ist als das Verhältnis zwischen der Differenz zwischen der doppelten Breite $L_p$ der Spur und dem dreifachen Durchmesser D des Lichtstrahls einerseits und dem sechsfachen Sinus des maximalen Winkels $\phi_M$ andererseits.

3. System gemäß Anspruch 2, dadurch gekennzeichnet, daß der Abstand d zwischen der optischen Achse und der Symmetrieebene des Schreibpols (POLI₁) zwischen zwei und vier Mikrometern liegt.

4. System gemäß einem der Ansprüche 1, 2, 3, dadurch gekennzeichnet, daß der Schreib-Wandler (TMI₁, TMI₂) ein integrierter Wandler ist, der mit den Techniken sehr hoher Integration vom VLSI-Typ hergestellt wird, wobei die optische Fokussierungsvorrichtung (SOI₁, SOI₂) eine integrierte Optik auf Silizium ist, die mit den Techniken hoher VLSI-Integration hergestellt wird.

5. System gemäß Anspruch 4, dadurch gekennzeichnet, daß der integrierte Wandler und die integrierte Optik am hinteren Ende wenigstens einer der zwei Kufen angeordnet sind, wobei der Wandler vor der integrierten Optik vorgesehen ist.

6. System gemäß einem der Ansprüche 1, 2, 3, dadurch gekennzeichnet, daß der Kopf eine Katamaran-Struktur aufweist und aus Silizium ist, wobei dieser Katamaran, der Wandler und die optische Vorrichtung integrierte Elemente sind, die mit den Techniken hoher (VLSI-Integration) hergestellt sind.

## FIG.1a

## FIG.1b

## FIG.3a

# FIG. 2

## FIG. 3b

## FIG.4

## FIG.5

## FIG.6a

## FIG.6b

## FIG.7